Europäisches Patentamt

European Patent Office

Office européen des brevets

(11) Publication number: **0 457 198 A2**

# EUROPEAN PATENT APPLICATION

(21) Application number: 91107558.8

(51) Int. Cl.⁵: **C08L 77/00, C08K 7/14**

(22) Date of filing: 09.05.91

(30) Priority: 17.05.90 JP 127487/90

(43) Date of publication of application:
**21.11.91 Bulletin 91/47**

(84) Designated Contracting States:
**CH DE FR GB IT LI**

(71) Applicant: **KISHIMOTO SANGYO COMPANY LTD.**
**3-7, Fushimimachi 3-chome, Chuo-ku Osaka(JP)**

(72) Inventor: **Moriwaki, Takeshi**
**12-11, 2-cho, Kaorigaoka-cho**
**Sakai-shi, Osaka(JP)**
Inventor: **Tsutsui, Kenji**
**62-12, Aho 2-chome,**
**Matsubara-shi, Osaka 580(JP)**

(74) Representative: **Türk, Gille, Hrabal**
**Brucknerstrasse 20**
**W-4000 Düsseldorf 13(DE)**

(54) **High strength polyamide composition and the process for manufacturing the same.**

(57) Polyamide composite characterized in high strength, high rigidity and high impact and also improved in the decrease of physical properties by water absorption were made by compounding 100 parts by weight of the mixture of 95-60% by weight of cryatalline aliphatic polyamide and 5-40% by weight of amorphous polyamide, and 25-150 parts by weight of glass fiber.

EP 0 457 198 A2

## BACKGROUND OF THE INVENTION

### Field of the invention

This invention relates to a new high strength, high rigidity polyamide composition that is improved in the decrease of physical properties by the absorption of water, and also provides the process for manufacturing

### Prior art

Crystalline aliphatic polyamide resins are widely used in mechanical parts, electric parts, and automobile parts, because it possesses good mechanical properties. Especially, when it is compounded with glass fibers, the strength, rigidity, heat resistance and impact strength are greatly improved.

The above characteristics depend mainly on the amide group consisting the molecule chain, but on the other hand, the amide group absorbs large amount of water, which make the molecule flexible and results in to decrease the strength and rigidity of the resin. Such defect of aliphatic polyamide meets a great dificulties when this resin is to be applied to high performance uses. Therefore many attempts have been made to improve the property.

A polyamide resin developed for such object includes a polyamide made by introducing aromatic hydrocarbons into the molecular chain. Such material is so called partially aromatic polyamide comprising a component having aromatic ring in anyone of the starting materials of conventional polyamides, diamine or dibasic acid. An example of such polyamide is polyamide MXD-6, which is made by polycondensation of metaxylylene diamine and adipic acid. The introduction of aromatic hydrocarbon into the molecular chain increases the rigidity and the heat resistance of the material, and in addition, since the water absorption reduces, it is also improved in the decrease of physical properties by the absorption of water. But, since the molecular chain becomes rigid, the impact resistance decreases. In the viewpoint of processing, the rigidity of the molecular chain reduces the melt flow of the material, and also the rate of crystallization becomes slow. Therefore generally it is reuired that the material must be cooled slowly by rising the mold temperature higher, but since this molding condition prolongs the molding cycle, it is extremely unfavourable for processing, and also the deviation of physical properties and dimensions of the molded parts become large by the incompleteness of the crystallization.

Thus, such prior art cannot produce a polyamide material balanced in processability, impact resistance and toughness, and also is economical in cost, therefore the improvement is eagerly required by the industry.

## SUMMARY OF THE INVENTION

The inventors intended to develop a new polyamide composition characterized in having impact resistance, toughness, and processability, and also improved in the decrease of physical properties by the absorption of water, and finally developed a new composition and the manufacturing process of the composition, thus this invention was completed.

This invention comprises;

(1) Fiber reinforced polyamide composition comprising

(a) 100 parts by weight of the mixture of 95-60 % by weight of crystalline aliphatic polyamide and 5-40 % by weight of amorphous polyamide and

(b) 25-150 parts by weight of glass fiber.

(2) The process of manufacturing fiber reinforced polyamide as described in Claim 1, wherein a tumble blend of

(a) 100 parts by weight of the mixture of 95-60 % by weight of crystalline aliphatic polyamide and 5-40 % by weight of amorphous polyamide and

(b) 25-150 parts by weight of glass fiber are injection molded by an injection molding machine equipped with a kneading mechanism.

## DETAILED DESCRIPTION OF THE INVENTION

The said aliphatic polyamide is a polymeric material containing amide linkage in the main chain, and is a linear polymeric material normally obtained by polycondensation of diamine with dibasic acid, ring-opening polymerization of lactam, or polycondensation of amino-carboxylic acid, etc. Examples of such polyamides include polyhexamethylene adipamide (nylon 66), polyhexamethylene sebamide (nylon 6-10), polycaprolactam (nylon 6), polyundecanoamide (nylon 11), polylauryllactum (nylon 12) and polytetramethylene adipamide (nylon 4-6), etc. Also included in the composition of this invention are copolymers such as nylon 6-66. Preferably the polyamide of this invention is polycaprolactum (nylon 6) and polyhexamethylene adipamide (nylon 66) in view of the popularity and the price.

In order to obtain better physical properties of the composition of this invention, it is preferable to increase the crystallinity of such aliphatic polyamide. Nucleating agents may be added for this object. The examples of nucleating agents are, fine particle talc, polyethylene terephthalate powder, organic phosphorous substance such as sodium bis(4-tert-butylphenyl) phosphate, magnesium 4-tert-butylphenol phosphate, etc. Normally such additives are used in the range of 0.1-1 % to the resin.

The amorphous polyamide used in this invention is a polymeric material having molecular structure combining linear aliphatic hydrocarbon, branched aliphatic hydrocarbon, and aromatic hydrocarbon etc. by amide linkage, and is substantially transparent amorphous polyamide. The composition for such amorphous polyamides include, for example, co-polycondensation product of hexamethylene diamine as diamine and two components of terephthalic acid and isophthalic acid as dibasic acid, or four component co-polycondensation product such as hexamethylene diamine and diamino alicyclic compound such as bis-(4-amino-cyclohexyl)-methane as diamine and terephthalic acid and isophtalic acid as dibasic acid. The said bis-(4-amino-cyclohexyl)-methane includes its alkyl derivatives and the chemical compounds having similar structure such as bis-(3-methyl-4-amino-cyclohexyl)-methane, bis-(3-methyl-4-amino-5-ethyl-cyclohexyl)-methane, 1,2-bis-(4-amino-cyclohexyl)-ethane, 2,2 ' -bis-(4-amino-cyclohexyl)-propane, 2,2' -bis-(3-methyl-4-amino-5-ethyl-cyclohexyl)-propane, etc. But this invention shall not be limited by the above examples. The amorphous polyamides do not possesses melting point, and the glass transition temperature (Tg) lies between 120-180 $^{\circ}$ C.

The effect of compounding such amorphous polyamide into crystalline polyamide is, as it becomes clear by the examples written later, not a simple additivity but it is surprising that even a small amount of amorphous polyamide can improve the properties of the compound remarkably. The cost of amorphous polyamide is necessarity higher than conventional crystalline polyamide such as nylon 6 or nylon 66 because of the complexity of the low materials composition, but since the composition of this invention provides large improvement in terms of the decrease of properties by the absorption of water by the introduction of small amount of amorphous amide, therefore it is extremely advantageous in view of cost performance.

The weight ratio of crystalline polyamide to amorphous polyamide to exhibit the effect lies between 95/5 to 60/40. If the ratio of amorphous polyamide is less than 5 % by weight, the improvement is little, and no more improvement is attainable when more than 40 % by weight of amorphous polyamide is used, because the effect is almost saturated and it is not practical because the surface of the molded parts lose the gloss.

Fiber reinforcements are the necessary component of this invention. Glass fiber is the most popular reinforcement, normally comprising of glassy material called as E glass, and is soled in the form of chopped strand fiber of 5-15 $\mu$ of fiber diameter and 3-6 mm length. Another material includes high strength glass fiber composed of S glass. Another reinforcements include carbon graphite fiber, pottasium titanate whisker, alumina fiber, zirconium fiber, MOS ($MgSO_4$ $\cdot$ $5MgO$ $\cdot$ $8H_2$ O) etc., which may be compounded together with glass fiber. The ratio of glass fiber is 25 parts by weight to 150 parts by weight, preferably 65-130 parts by weight to 100 parts by weight of resin.

Another surprising advantage of the composition of this invention is that this composition can incorporate much amount of glass fiber than those composed of crystalline aliphatic polyamide alone. For example, in the case of glass fiber reinforced polyamide 6 or polyamide 66, the surface of injection molded parts become extremely rough when the glass fiber content exceeds 82 parts by weight to 100 parts by weight of resin (nylon/glass fiber weight ratio = 55/45), but a molded parts having smooth surface can be obtained for the composite of this invention even if the glass fiber is increased to 150 parts by weight to 100 parts by weight resin (nylon/glass fiber weight ratio = 40/60). Consequently, the strength and the rigidity can successfully be increased remarkably than the glass fiber reinforced polyamide of prior art.

The polyamide composite referred to this invention can incorporate stabilizers, plasticizers, mold release agents, lubricants (or slip agents), ultraviolet stabilizers, flame retardants etc., of a prior arts to enhance the specific property required. The molding of the composite of this invention can be made by usual procedure, namely, the mixture of each component is melt compounded by extruder such as single screw extruder, twin screw extruder, or extruder equipped with a kneading mechanism. In this compounding process, glass fiber can be mixed and fed with resin components, but preferably, it is desirable to feed the resin mixture at the feed zone of the machine and feed glass fiber continuously into the molten resin from the inlet port installed at the down stream of the extruder to keep the length of the glass fiber longer after it is compounded, which is favorable to give composite having greater mechanical properties.

Another method for carrying out the manufacturing of the composite referred to this invention is, that molded parts of the composite of this invention are produced by injection molding directly from the tumble blend of resins and glass fiber. Namely, this invention can be accomplished by injection molding the tumble blend mixture of 100 parts by weight of the mixture comprising 95-60 % by weight of crystalline aliphatic polyamide and 5-40 % by weight of amorphous polyamide and 25-150 parts by weight of glass fiber, by injection molding machine equipped with kneading mechanism described below. The process that melt and mix the composite is accomplished by equipping suitable mixing and dispersing mechanism to the screw and/or the cylinder of reciprocating screw injection molding machine. The structure for such screw used for this invention is that intensifies the mixing/dispersing action of normal single screw, including multi-flights helical screw, Dulmage type screw, pin type screw, gear type screw for example. The most preferable mixing/dispersing mechanism for the injection molding machine used in this invention is that described in Japan Patent No. 1,104,727 (U.S. Patent No. 4,300,840). But this invention is not limited by this process.

Thus, this invention provides reinforced polyamide composite characterized in that it is superior in impact resistance, strength, rigidity, and also is improved in the decrease of physical properties by absorption of water, which exceeds the performance of crystalline aliphatic polyamide of prior art, and superior than crystalline partially aromatic polyamide in impact resistance and processability and also advantageous in cost performance, therefore, the industrial advantage of this invention is extremely great.

In addition, the inventors have developed the process for manufacturing such high performance composite.

PREFERRED EMBODIMENTS

The following examples illustrate the composition of the present invention.

(1) Plastic materials

Crystalline polyamide 6
a. A28GM made by EMS-CHEMIE AG.
b. A23FC made by EMS-CHEMIE AG.
c. 1013B made by Ube Industries Ltd.
Crystalline polyamide 66
d. 2020B made by Ube Industries Ltd.
Amorphous polyamide
e. G21 made by EMS-CHEMIE AG.
f. XE3038 made by EMS-CHEMIE AG.
g. XE3238 made by EMS-CHEMIE AG.

(2) Glass fiber

3PE-454 made by Nitto Boseki Co., Ltd.

(3) Comparative materials

Glass fiber reinforced polyamide 6
(Glass fiber 45 %)
h. 1015CG6 made by Ube Industries Ltd.
Glass fiber reinforced polyamide 66
h. 2020GC9 made by Ube Industries Ltd.

Examples 1-9, Comparative examples 1-3

Crystalline polyamides and amorphous polyamides are mixed in a drum blender by the weight written in Table 1, and then extruded by 40 mm φ single screw extruder by usual technique. The resulting pellets were mixed with glass fiber by using drum blender as in the ratio of Table 1, and then injection molded by a reciprocating screw injection molding machine equipped with a kneading mechanism described in Japan Patent No. 1,104,727. The molding products are a set of tensile specimen specified in ASTM D638 and flexural test specimen (12.6mm in width, 3.2mm in thickness and 126mm in length) specified in ASTM D790, and injection molding were carried out at cylinder temperature of 280°C (for examples 1-6 and comparative examples 1 and 2) and 290 °C (for examples 7-9 and comparative example 3), and mold temperature of 80°C. In addition, comparative materials h and i were molded by an injection molding machine (SN75 made by Niigata Engineering Co., Ltd.), equipped with a normal screw and cylinder, and using the same mold.

Tensile strength (ASTM D638), flexural strength and flexural modulus (ASTM D790), Izod impact (ASTM D256), deflection temperature under load (ASTM D648) and specific gravity (ASTM D792) were measured at as molded (dry) condition and after conditioned to 23 °C, 60 % RH by the procedure written in ISO Standard 1110.

As the results, it was demonstrated that the physical properties of examples 1-6 are same or better than comparative material h, and examples 7-9 are same or better than comparative material i at as molded condition, and particularly the ratio of property retention after conditioned to 23 °C, 60 % RH are superior than those of the comparative materials.

Examples 10-16, Comparative examples 4-5

Crystalline polyamides, amorphous polyamides and glass fibers are mixed by drum blender by the weight written is Table 2, and then injection molded by using the reciprocating screw injection molding machine equipped with a kneading mechanism written in Japan Patent No. 1,104,727. The molding products are a set of tensile specimen specified in ASTM D638 and flexural test specimen (12.6mm in width, 3.2mm in thickness and 126mm in length) specified in ASTM D790, and injection molding were carried out at cylinder temperature of 280°C and mold temperature of 80 °C. The measurements were made on the molded specimens as same as examples 1-9.

As the results, all of the examples 10-16 are superior both in the physical properties after conditioned and the appearance of the molded products, so it was demonstrated this invention greatly improves the performance of reinforced polyamide of prior arts.

Examples 17-19, Comparative examples 6 and 7

Crystalline polyamides, amorphous polyamides and glass fibers are mixed by drum blender by the weight written is Table 2, and then injection molded as same as examples 10-16 but with cylinder temperature of 290 °C and mold temperature of 95°C. Examples 17-19 gave molded products with smooth and glossy surface, and by the results of physical property measurements, the strength and flexural modulus were extremely high, and the reduction of physical properties by absorption of water were very little, thus producing a high performance material unattainable by prior art.

Meanwhile, the surface of the molded product of comparative example 6 was rough and much amount of glass fiber were shown on the surface, which indicates it is unsuitable for practical use, and also the physical

EP 0 457 198 A2

$$\mathrm{T\ a\ b\ l\ e\ -\ 1}$$

| Items | Units | Example 1 | Example 2 | Example 3 | Comparative example 1 | Example 4 | Example 5 | Example 6 | Comparative example 2 |
|---|---|---|---|---|---|---|---|---|---|
| Crystalline polyamide | Grade | a | a | a | a | a | a | a | a |
|  | g | 2,700 | 2,400 | 1,800 | 1,500 | 2,700 | 2,400 | 1,800 | 1,500 |
| Amorphous polyamide | Grade | e | e | e | e | f | f | f | f |
|  | g | 300 | 600 | 1,200 | 1,500 | 300 | 600 | 1,200 | 1,500 |
| Polyamide alloy/Glass fiber |  | 60/40 | 60/40 | 60/40 | 60/40 | 60/40 | 60/40 | 60/40 | 60/40 |
| Tensile strength (As molded) | $kg/mm^2$ | 24.3 | 23.5 | 22.0 | 20.0 | 24.2 | 22.2 | 22.0 | 23.0 |
| (Conditioned)* | $kg/mm^2$ | 18.2 | 19.6 | 20.2 | 20.0 | 19.1 | 19.1 | 20.5 | 21.9 |
| (As molded)/(Conditioned) | % | 75 | 83 | 92 | 100 | 79 | 86 | 93 | 95 |
| Flexural strength (As molded) | $kg/mm^2$ | 37.4 | 36.7 | 34.0 | 29.0 | 36.8 | 35.1 | 36.0 | 34.2 |
| (Conditioned) | $kg/mm^2$ | 29.5 | 31.8 | 32.0 | 29.0 | 29.1 | 32.8 | 34.2 | 34.1 |
| (As molded)/(Conditioned) | % | 78 | 86 | 94 | 100 | 79 | 93 | 95 | 100 |
| Flexural modulus (As molded) | $kg/mm^2$ | 1,216 | 1,225 | 1,100 | 1,100 | 1,215 | 1,210 | 1,245 | 1,250 |
| (Conditioned) | $kg/mm^2$ | 962 | 1,085 | 1,090 | 1,090 | 996 | 1,170 | 1,230 | 1,240 |
| (As molded)/(Conditioned) | % | 79 | 89 | 99 | 99 | 82 | 97 | 99 | 99 |
| Izod impact (As molded) | $kg \cdot cm/cm$ | 17.3 | 17.4 | 14.0 | 14.0 | 14.5 | 16.1 | 17.2 | 14.0 |
| (Conditioned) | $kg \cdot cm/cm$ | 18.2 | 17.1 | 16.0 | 15.0 | 14.3 | 16.1 | 17.5 | 14.5 |
| DTUL (18.6$kg/cm^2$ As molded) | ℃ | 218 | 211 | 205 | 203 | 208 | 210 | 210 | 210 |
| Specific gravity |  | 1.45 | 1.45 | 1.45 | 1.48 | 1.43 | 1.43 | 1.44 | 1.45 |
| Appearance |  | Smooth | Smooth | Smooth | Lose gloss | Smooth | Smooth | Lose gloss | Poor |

* 23℃, 50%RH

Table – 1  (Continued)

| Comparative material | Example 7 | Example 8 | Example 9 | Comparative example 3 | Comparative material |
|---|---|---|---|---|---|
| h | d | d | d | d | i |
|  | 2,700 | 2,400 | 1,800 | 1,500 |  |
|  | f | f | f | f |  |
|  | 300 | 600 | 1,200 | 1,500 |  |
|  | 60/40 | 60/40 | 60/40 | 60/40 |  |
| 17.0 | 23.1 | 23.4 | 23.5 | 23.0 | 22.0 |
| 19.0 | 19.9 | 22.0 | 22.5 | 22.5 | 17.0 |
| 53 | 86 | 94 | 98 | 98 | 77 |
| 26.0 | 36.9 | 37.5 | 38.0 | 35.2 | 30.0 |
| 19.0 | 33.6 | 36.0 | 37.0 | 35.0 | 21.0 |
| 55 | 91 | 96 | 97 | 99 | 70 |
| 850 | 1,260 | 1,270 | 1,270 | 1,260 | 1,250 |
| 550 | 1,180 | 1,330 | 1,340 | 1,350 | 890 |
| 65 | 92 | 105 | 106 | 107 | 71 |
| 9.0 | 15.3 | 15.5 | 15.0 | 14.0 | 11.0 |
| 16.5 | 13.9 | 14.5 | 15.0 | 14.5 | 15.0 |
| 215 | 258 | 253 | 252 | 250 | 255 |
| 1.50 | 1.46 | 1.46 | 1.46 | 1.47 | 1.50 |
| Smooth | Smooth | Smooth | Smooth | Poor | Smooth |

Table-2

| Items | Units | Example 10 | Example 11 | Example 12 | Example 13 | Example 14 | Example 15 | Example 16 | Comparative example 4 | Comparative example 5 |
|---|---|---|---|---|---|---|---|---|---|---|
| Crystalline polyamide | Grade | b | b | b | a | c | b | b | b | a |
| | g | 1,620 | 1,485 | 1,350 | 1,350 | 1,350 | 1,440 | 1,080 | 900 | 1,650 |
| Amorphous polyamide | Grade | e | e | e | e | e | e | e | e | |
| | g | 180 | 165 | 150 | 150 | 150 | 360 | 720 | 900 | |
| Glass fiber | g | 1,200 | 1,350 | 1,500 | 1,500 | 1,500 | 1,200 | 1,200 | 1,200 | 1,350 |
| Tensile strength (As molded) | kg/mm² | 20.1 | 22.5 | 24.0 | 24.5 | 24.2 | 21.5 | 22.5 | 22.0 | 20.4 |
| (Conditioned) | kg/mm² | 14.1 | 16.2 | 17.5 | 18.3 | 18.1 | 18.3 | 22.1 | 21.6 | 12.6 |
| (As molded)/(Conditioned) | % | 70 | 72 | 73 | 75 | 74 | 85 | 98 | 98 | 62 |
| Flexural strength (As molded) | kg/mm² | 34.5 | 35.0 | 36.0 | 37.5 | 35.4 | 37.5 | 38.3 | 36.3 | 29.0 |
| (Conditioned) | kg/mm² | 24.8 | 25.9 | 27.0 | 30.5 | 27.8 | 31.5 | 37.2 | 35.2 | 14.8 |
| (As molded)/(Conditioned) | % | 72 | 74 | 75 | 79 | 78 | 84 | 97 | 97 | 51 |
| Flexural modulus (As molded) | kg/mm² | 1,220 | 1,410 | 1,600 | 1,220 | 1,210 | 1,250 | 1,270 | 1,230 | 1,200 |
| (Conditioned) | kg/mm² | 980 | 1,160 | 1,280 | 990 | 960 | 1,080 | 1,280 | 1,340 | 620 |
| (As molded)/(Conditioned) | % | 80 | 82 | 80 | 81 | 79 | 86 | 101 | 109 | 52 |
| Izod impact (As molded) | kg·cm/cm | 18.2 | 18.0 | 16.8 | 17.3 | 18.2 | 17.8 | 15.0 | 14.3 | 15.0 |
| (Conditioned) | kg·cm/cm | 19.5 | 19.5 | 18.8 | 18.2 | 19.5 | 18.5 | 16.5 | 13.9 | 21.0 |
| Specific gravity | | 1.45 | 1.51 | 1.58 | 1.45 | 1.45 | 1.45 | 1.44 | 1.44 | 1.50 |
| Appearance | | Smooth | Smooth | Smooth | Smooth | Smooth | Smooth | Smooth | Rough | Smooth |

EP 0 457 198 A2

## Table - 3

| Items | Units | Example 17 | Example 18 | Example 19 | Comparative example 8 | Comparative example 7** |
|---|---|---|---|---|---|---|
| Crystalline polyamide | Grade | d | d | d | d | d |
|  |  | 980 | 884 | 960 | 1,200 | 1,080 |
| Amorphous polyamide | Grade | b | b | b |  |  |
|  |  | 240 | 218 | 240 |  |  |
| Glass fiber |  | 1,200 | 1,320 | 1,800 | 1,200 | 1,320 |
| Tensile strength (As molded) | kg/mm² | 28.0 | 28.1 | 29.8 | 23.3 |  |
| (Conditioned) | kg/mm² | 25.2 | 27.8 | 29.5 | 15.2 |  |
| (As molded)/(Conditioned) | % | 97 | 99 | 99 | 85 |  |
| Flexural strength (As molded) | kg/mm² | 37.0 | 44.3 | 48.4 | 32.5 |  |
| (Conditioned) | kg/mm² | 36.7 | 43.5 | 48.5 | 17.9 |  |
| (As molded)/(Conditioned) | % | 99 | 99 | 100 | 55 |  |
| Flexural modulus (As molded) | kg/mm² | 1,870 | 1,080 | 2,144 | 1,820 |  |
| (Conditioned) | kg/mm² | 1,890 | 2,080 | 2,280 | 1,125 |  |
| (As molded)/(Conditioned) | % | 101 | 105 | 107 | 82 |  |
| Izod impact (As molded) | kg·cm/cm | 22.5 | 22.8 | 23.5 | 16.5 |  |
| (Conditioned) | kg·cm/cm | 21.8 | 23.1 | 23.3 | 20.5 |  |
| Specific gravity |  | 1.58 | 1.84 | 1.70 | 1.57 |  |
| Appearance |  | Smooth | Smooth | Smooth | Rough surface |  |

** This example could not be molded because undispersed glass fiber plugged the nozzle of the machine.

properties is not so increased as compared to comparative example 5 of Table 2. When glass fiber content is increased to 60 % by weight as comparative example 6 that used neat polyamide 66, glass fiber dispersion were so poor that they plugged the nozzle of the machine, and failed to continue consistent molding operation.

Effect of the Invention

The present invention provides useful and cost favorable composite by compounding crystalline aliphatic polyamide and amorphous polyamide and glass fiber in proper ratios, resulting in to retain the characteristics of both polyamide resins, namely make the best use of impact strength, toughness, rigidity and excellent in properties by water absorption was greatly improved, thus, exceeding in total performance of both polyamides.

## Claims

1. Fiber reinforced polyamide composition comprising
   (a) 100 parts by weight of the mixture of 95-60 % by weight of crystalline aliphatic polyamide and 5-40 % by weight of amorphous polyamide and
   (b) 25-150 parts by weight of glass fiber.

2. The process of manufacturing fiber reinforced polyamide as described in Claim 1, wherein a tumble blend of
   (a) 100 parts by weight of the mixture of 95-60 % by weight of crystalline aliphatic polyamide and 5-40 % by weight of amorphous polyamide and
   (b) 25-150 parts by weight of glass fiber are injection molded by an injection molding machine equipped with a kneading mechanism.